# EUROPEAN PATENT APPLICATION

(11) **EP 4 679 570 A1**
(43) Date of publication of application: **14.01.2026**
(21) Application number: 24785045.6
(22) Date of filing: 05.03.2024
(51) Int. Cl.: H01M 10/658, H01M 50/103, H01M 10/052

(54) **SECONDARY BATTERY**

(30) Priority: 07.04.2023 KR 20230046251
(71) Applicant: SK On Co., Ltd., Seoul 03161 (KR)
(72) Inventor: SHIN, Jae Sik, Daejeon 34124 (KR); KO, Bo Kyung, Daejeon 34124 (KR); PARK, Do Il, Daejeon 34124 (KR); JU, Seung Hoon, Daejeon 34124 (KR)
(74) Representative: Prüfer & Partner mbB Patentanwälte · Rechtsanwälte
(86) International application number: PCT/KR2024/002766
(87) International publication number: WO 2024/210335

(57) **Abstract**

A secondary battery according to embodiments of the present disclosure comprises: a case; and a stack housed within the case, wherein the stack comprises: a plurality of electrode assemblies; and an insulating barrier structure disposed between the electrode assemblies. Accordingly, thermal transfer between the electrode assemblies is prevented, thereby improving the safety of the secondary battery.

## Description

### [TECHNICAL FIELD]

The disclosure of the present application relates to a secondary battery. More particularly, the disclosure of the present application relates to a secondary battery including an electrode assembly.

### [BACKGROUND ART]

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of eco-friendly vehicle such as an hybrid vehicle, an electric vehicle, etc.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

For example, the secondary battery may include an electrode assembly including a cathode, an anode and a separation layer (separator), and an electrolyte impregnating the electrode assembly. The secondary battery may further include a case accommodating the electrode assembly and the electrolyte.

When a plurality of the electrode assemblies are inserted into the case, ignition of one electrode assembly by short-circuit or penetration may cause other electrode assemblies to be exposed to high heat. The heat transition to other electrode assemblies may cause explosion of the secondary

### DETAILED DESCRIPTIONS OF THE INVENTION

### [Technical Objective]

According to an objective of the present disclosure, there is provided a secondary battery having improved stability.

### [Means for Resolving the Objective]

A secondary battery according to embodiments may include a case; and a stacked structure accommodated in the case, and the stacked structure may include a plurality of electrode assemblies; and an insulating barrier structure disposed between the electrode assemblies.

In some embodiments, the insulating barrier structure may include a polymer having a thermal conductivity of 0.01 W/mK to 0.35 W/mK.

In some embodiments, the insulating barrier structure may consist of the polymer.

In some embodiments, the insulating barrier structure may include at least one polymer selected from the group consisting of polyimide, polytetrafluoroethylene, polyurethane, polystyrene, polyvinyl chloride, cellulose acetate, polyvinylidene fluoride, polyacrylonitrile, polymethyl methacrylate, polyvinylacetate, and polyvinyl alcohol.

In some embodiments, a thickness of the insulating barrier structure may be in a range from 10 µm to 200 µm.

In some embodiments, the case may include a prismatic case that has main surfaces opposing each other, an external terminal withdrawal surface connected to upper sides of the main surfaces, and side surfaces opposing each other.

In some embodiments, the electrode assembly may include active surfaces facing the main surfaces of the prismatic case, an electrode tab withdrawal surface facing the side surface of the prismatic case, an upper surface facing the external terminal withdrawal surface of the prismatic case, and a lower surface facing a bottom surface of the prismatic case and opposing the upper surface.

In some embodiments, the insulating barrier structure may contact the active surfaces of adjacent electrode assemblies, and may face the main surface of the prismatic case with the electrode assembly interposed therebetween.

In some embodiments, the insulating barrier structure may extend toward the external terminal withdrawal surface of the prismatic case, and may not protrude over the upper surface of the electrode assembly.

In some embodiments, the insulating barrier structure may extend toward the side surface of the prismatic case, and may not protrude beyond the electrode tab withdrawal surface of the electrode assembly.

In some embodiments, the insulating barrier structure may not be disposed on an outermost active surface of the stacked structure among the active surfaces of the electrode assemblies.

In some embodiments, the secondary battery may further include an electrode lead extending along the side surface of the prismatic case toward the external terminal withdrawal surface; and an external terminal disposed on the external terminal withdrawal surface of the prismatic case and connected to the electrode lead, and the electrode assembly may include an electrode tab protruding from the electrode tab withdrawal surface to be connected to the electrode lead.

In some embodiments, the electrode lead may include an extension portion connected to the electrode tab and extending along the side surface of the prismatic case, and a connection portion extending from the extension portion in parallel to the external terminal withdrawal surface to be connected to the external terminal.

### [Effects of the Invention]

In a lithium secondary battery according to example examples, an insulating barrier structure including a polymer having a low thermal conductivity may be disposed between electrode assemblies. Thus, thermal transition between the electrode assemblies may be prevented, and safety of the secondary battery may be improved.

### [Brief Descriptions of the Drawings]

FIG. 1 is a schematic perspective view illustrating a secondary battery according to embodiments.
FIG. 2 is a schematic side view illustrating a stacked structure included in a secondary battery according to embodiments.
FIG. 3 is a cross-sectional view of an electrode assembly included in a secondary battery according to embodiments.

### [Implementation for Practicing the Invention]

According to embodiments of the present disclosure, a secondary battery including a case and a stacked structure accommodated in the case and including a plurality of electrode assemblies is provided. For example, a shape of the case may be a prismatic shape, a circular shape, or a pouch shape shape, and preferably may be a prismatic shape.

Hereinafter, embodiments of the present disclosure will be described in more detail with reference to drawings. However, since the embodiments provided in the present specification provide some preferred examples and serve to further understand the technical concepts of the present disclosure together with the above-described contents of the present disclosure, the present disclosure should not be interpreted by being limited to the matters described in such embodiments.

The terms in the present specification such as "top surface", "bottom surface", "upper portion", "lower portion", "lower surface", "bottom portion", "front surface", "rear surface", etc., are used in a relative sense to distinguish the positions of elements and are not designate absolutely positions.

In the accompanying drawings, three directions perpendicularly intersecting each other are defined as a first direction, a second direction and a third direction. The first direction may correspond to a longitudinal direction of a prismatic case 100, a stacked structure 200, or electrode assemblies 110a and 110b. The second direction may correspond to a width direction of the prismatic case 100, the stacked structure 200, or the electrode assemblies 110a and 110b. The third direction may correspond to a thickness direction of the prismatic case 100, the stacked structure 200, or the electrode assemblies 110a and 110b. A direction indicated by arrows and a direction opposite thereto are regarded as the same direction.

For example, a length of the prismatic case 100, the stacked structure 200, or the electrode assemblies 110a and 110b in the first direction may be greater than each of a width in the second direction and a thickness in the third direction of the prismatic case 100, the stacked structure 200, or the electrode assemblies 110a and 110b.

The width of the prismatic case 100, the stacked structure 200, or the electrode assemblies 110a and 110b in the second direction may be greater than the thickness in the third direction of the prismatic case 100, the stacked structure 200, or the electrode assemblies 110a and 110b.

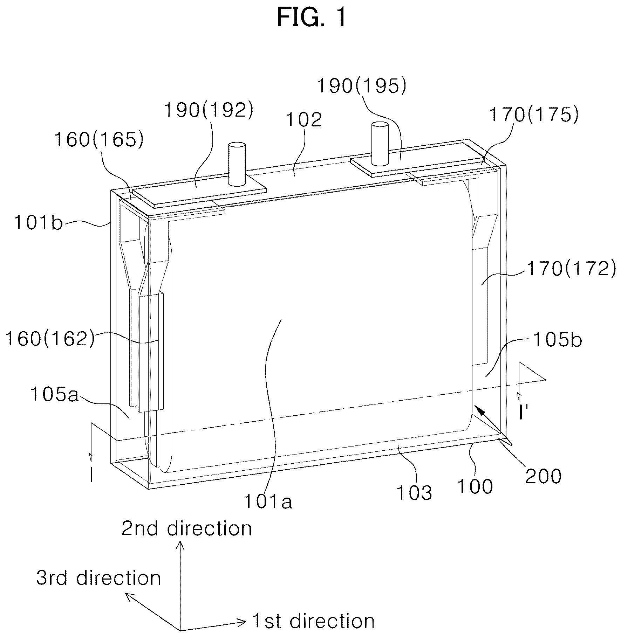

FIG. 1 is a schematic perspective view illustrating a secondary battery according to embodiments. In FIG. 1, the stacked structure 200 is illustrated in a form viewed together with the prismatic case 100, and a reference numeral of the stacked structure 200 in FIG. 1 is designated by an arrow.

Referring to FIG. 1, the secondary battery includes the stacked structure 200 accommodated in the prismatic case 100, and the stacked structure 200 includes the electrode assemblies 110a and 110b, and an insulating barrier structure 300 disposed between the electrode assemblies 110a and 110b. The prismatic case 100 may have, e.g., a rectangular parallelepiped shape.

Outer surfaces of the prismatic case 100 may include main faces 101a and 101b, an external terminal withdrawal surface 102, and side surfaces 105a and 105b. The prismatic case 100 may further include a bottom surface 103 facing the external terminal withdrawal surface 102.

The main surfaces 101a and 101b may correspond to a surface having the largest area among the outer surfaces of the prismatic case 100. The main surfaces 101a and 101b may include a first main surface 101a and a second main surface 101b facing in the third direction. The external terminal withdrawal surface 102 may correspond to a top surface of the prismatic case 100. The external terminal withdrawal surface 102 may face the bottom surface 103 in the second direction.

The side surfaces 105a and 105b may include a first side surface 105a and a second side face 105b facing in the first direction.

The stacked structure 200 including a plurality of the electrode assemblies 110a and 110b and the insulating barrier structure 300, and the electrode assembly 110 may be accommodated in the prismatic case. Electrode leads 160 and 170 may be electrically connected to end portions of the electrode assemblies 110a and 110b in the first direction. For example, the electrode leads 160 and 170 may include extension portions 162 and 172 connected to the end portions of the electrode assemblies 110a and 110b to face the side surfaces 105a and 105b of the prismatic case 100, and connection portions 165 and 175 extending in parallel to the external terminal withdrawal surface 102 of the prismatic case 100 from the extension portions 162 and 172.

The extension portions 162 and 172 may extend toward the external terminal withdrawal surface 102 along the side surfaces 105a and 105b of the prismatic case 100.

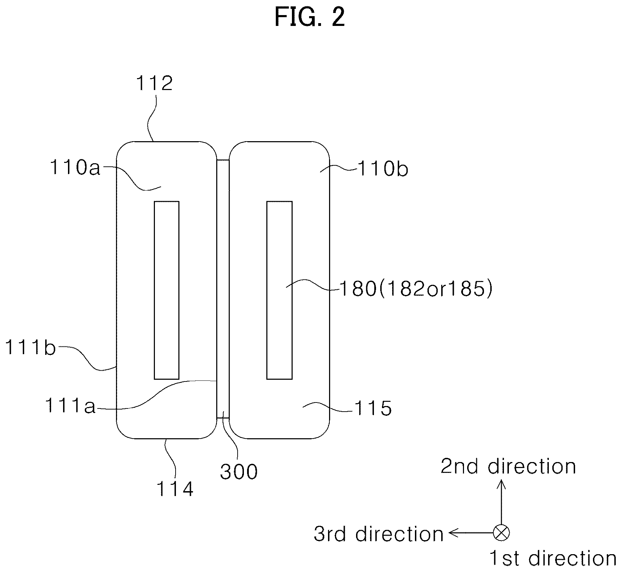

The electrode leads 160 and 170 may be in contact with or connected to the electrode tabs 180 (see FIG. 2) of the electrode assemblies 110a and 110b. The electrode leads 160 and 170 may include a cathode lead 160 connected to a cathode tab 182, and an anode lead 170 connected to the anode tab 185.

The cathode lead 160 and the cathode tab 182 may be adjacent to the first side surface 105a of the prismatic case 100, and may be disposed at one end portion of the electrode assemblies 110a and 110b in the first direction. The cathode lead 160 may include a cathode lead extension portion 162 and a cathode lead connection portion 165.

The anode lead 170 and the anode tab 185 may be adjacent to the second side surface 105b of the prismatic case 100, and may be disposed at the other end portion of the electrode assemblies 110a and 110b in the first direction. The anode lead 170 may include an anode lead extension portion 172 and an anode lead connection portion 175.

An external terminal 190 may be disposed at an outside of the prismatic case 100, and may be disposed on the external terminal withdrawal surface 102. The external terminal 190 may be in a surface contact with the connection portions 165 and 175 of the electrode leads 160 and 170 through the external terminal withdrawal surface 102.

For example, the connection portions 165 and 175 may be exposed or withdrawn onto the external terminal withdrawal surface 102 through the external terminal withdrawal surface 102 to be in the surface contact with the external terminal 190.

The external terminal 190 may include a cathode terminal 192 connected to the cathode lead 160 and an anode terminal 195 connected to the anode lead 170.

The secondary battery according to embodiments includes the insulating barrier structure 300 disposed between a plurality of electrode assemblies 110a and 110b, so that heat transfer to another electrode assembly may be prevented even when heat is generated from one electrode assembly. Thus, a period that high heat generated by an internal short-circuit is transferred to the stacked structure 200 to cause ignition or explosion of the the secondary battery is delayed, thereby improving safety of the secondary battery.

In some embodiments, the insulating barrier structure 300 may include a polymer having a thermal conductivity of 0.01 W/mK to 0.35 W/mK. For example, the polymer may have a thermal conductivity of 0.01 W/mK to 0.35 W/mK. For example, the polymer may have a thermal conductivity of 0.01 W/mK to 0.3 W/mK, 0.015 W/mK to 0.25 W/mK, or 0.03 W/mK to 0.1 W/mK.

In the above range, the thermal conductivity of the insulating barrier structure 300 including the polymer may be reduced, thereby preventing the thermal transition between the electrode assemblies 110a and 110b to further improve safety of the secondary battery.

In an embodiment, the insulating barrier structure 300 may consist of the polymer. Preferably, the insulating barrier structure 300 may not include a metal. For example, copper and aluminum have a high thermal conductivity of 200 W/mK or more. Accordingly, when the barrier layer 300 does not include the metal, the thermal conductivity may be further lowered.

In some embodiments, the insulating barrier structure 300 may include at least one polymer selected from the group consisting of polyimide, polytetrafluoroethylene, polyurethane, polystyrene, polyvinyl chloride, cellulose acetate, polyvinylidene fluoride, polyacrylonitrile, polymethylmethacrylate, polyvinyl acetate and polyvinyl alcohol.

In a preferable embodiment, the insulating barrier structure 300 may include polyimide, polytetrafluoroethylene, polyurethane, polystyrene, or polyvinyl chloride.

In some embodiments, a thickness of the insulating barrier structure 300 may be in a range from 10 µm to 200 µm. For example, the thickness may be in a range from 20 µm to 180 µm, from 30 µm to 150 µm, from 50 µm to 100 µm, or from 10 µm to 100 µm. In the above range, the heat transition between the electrode assemblies 110a and 110b may be prevented without decreasing an energy density of the secondary battery.

FIG. 2 is a schematic side view illustrating a stacked structure included in a secondary battery according to embodiments. Specifically, FIG. 2 is a side view in the first direction of the stacked structure 200 including the electrode assemblies 110a and 110b, and the insulating barrier structure 300.

Referring to FIG. 2, outer surfaces of the electrode assemblies 110a and 110b may include active surfaces 111a and 111b, an electrode tab withdrawal surface 115, an upper surface 112, and a lower surface 114.

The term "active surface" used in the present application may refer to a surface having the largest area among outer surfaces. The active surfaces 111a and 111b may include a first active surface 111a and a second active surface 111b.

The first active surface 111a and the second active surface 111b may face the first main surface 101a and the second main surface 101b of the prismatic case 100 in the third direction, respectively.

In some embodiments, the insulating barrier structure 300 may be in contact with the active surfaces 111a and 111b of neighboring electrode assemblies 110a and 110b, and may face the main surfaces 101a and 101b of the prismatic case 100 with the electrode assemblies 110a and 110b interposed therebetween.

In some embodiments, the insulating barrier structure 300 may extend toward the external terminal withdrawal surface 102 of the prismatic case 100 and may not protrude over the upper surface 112 of the electrode assemblies 110a and 110b.

In some embodiments, the insulating barrier structure 300 may extend toward the side surfaces 105a and 105b of the prismatic case 100 and may not protrude to an outside of the electrode tab withdrawal surfaces 115 of the electrode assemblies 110a and 110b.

Accordingly, the heat transition between the electrode assemblies 110a and 110b may be prevented while easily manufacturing the stacked structure 200.

In some embodiments, the insulating barrier structure 300 may not be disposed on an outermost active surface of the stacked structure 200 among the active surfaces 111a and 111b of the electrode assemblies 110a and 110b. Accordingly, heat generated from the electrode assemblies 110a and 110b may be radiated to an outside through the main surfaces 101a and 101b of the prismatic case 100, thereby preventing a temperature increase of the secondary battery.

The electrode tab withdrawal surface 115 may face the side surfaces 105a and 105b of the prismatic case 100 in the first direction. For example, the electrode tab withdrawal surface 115 may be formed on each of both side surfaces of the electrode assemblies 110a and 110b in the second direction, and may include a cathode tab withdrawal surface from which the cathode tab 182 protrudes and an anode tab withdrawal surface from which the anode tab 185 is withdrawn.

The upper and lower surfaces 112 and 114 of the electrode assemblies 110a and 110b may face the external terminal withdrawal surface 102 and the bottom surface 103 of the prismatic case 100 in the second direction, respectively. In some embodiments, the upper surface 112 and the bottom surface 114 may each include a curved surface.

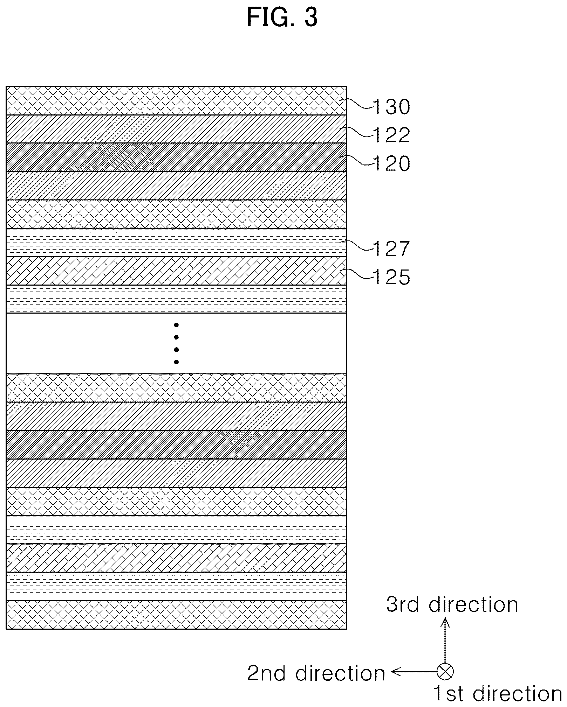

FIG. 3 is a cross-sectional view of an electrode assembly included in a secondary battery according to embodiments. Specifically, FIG. 3 is a cross-sectional view taken along line I-I' of FIG. 1.

Referring to FIG. 3, the electrode assemblies 110a and 110b may include repeatedly stacked cathodes and anodes, and a separator 130 interposed between the cathodes and anodes.

The cathode may include a cathode current collector 120 and a cathode active material layer 122 formed by coating a cathode active material on the cathode current collector 120.

The cathode current collector 120 may include stainless steel, nickel, aluminum, titanium, copper, zinc, or an alloy thereof, and preferably may include aluminum or an aluminum alloy. For example, the cathode current collector 120 may be formed from an aluminum foil.

The cathode active material may include a compound capable of reversibly intercalating and deintercalating lithium ions. In this case, the secondary battery may be provided as a lithium secondary battery.

In an embodiment, the cathode active material may include a lithium-transition metal composite oxide particles. For example, the lithium-transition metal composite oxide particles include nickel (Ni), and may further include at least one of cobalt (Co) and manganese (Mn).

For example, a slurry may be prepared by mixing and stirring the cathode active material with a binder, a conductive material and/or a dispersing material in a solvent. The slurry may be coated on the cathode current collector 120, and then pressed and dried to prepare the cathode including the cathode active material layer 122.

The binder may include, e.g., an organic binder such as vinylidene fluoride-hexafluoropropylene copolymer (PVDF-co-HFP), polyvinylidene fluoride (PVDF), polyacrylonitrile, polymethylmethacrylate, or an aqueous binder such as styrene-butadiene rubber (SBR), and may be used together with a thickener such as carboxymethyl cellulose (CMC).

The conductive material may be included to promote electron transfer between active material particles. For example, the conductive material may include a carbon-based conductive material such as graphite, carbon black, graphene, carbon nanotube, etc., and/or a metal-based conductive material including tin, tin oxide, titanium oxide, a perovskite material such as LaSrCoO₃, LaSrMnO₃, or the like.

The anode may include an anode current collector 125 and an anode active material layer 127 formed by coating an anode active material on the anode current collector 125.

The anode current collector 235 may include stainless steel, copper, nickel, aluminum, titanium, or an alloy thereof. Preferably, the anode current collector 235 may include copper or a copper alloy. For example, the anode current collector 235 may be prepared from a copper foil.

The cathode current collector 120 may include the cathode tab 182 protruding toward one of the side surfaces 105a and 105b of the prismatic case 100. The anode current collector 235 may include the anode tab 185 protruding toward the other of the side surfaces 105a and 105b of the prismatic case 100.

An active material known in the art capable of adsorbing and deintercalating lithium ions may be used as the anode active material. For example, a carbon-based material such as crystalline carbon, amorphous carbon, carbon composite, carbon fiber, etc.; a lithium alloy; a silicon (Si)-based active material, or the like may be used.

For example, the anode active material may be mixed and stirred in a solvent together with the above-described binder, the conductive material, the thickener, or the like. The slurry may be coated on at least one surface of the anode current collector 125, and then pressed and dried to prepare an anode including the anode active material layer 127.

Materials substantially the same as or similar to the above-described materials used in the cathode active material layer 122 may be used as the binder and the conductive material. In some embodiments, the binder for forming the anode may include an aqueous binder such as styrene-butadiene rubber (SBR) for compatibility with a carbon-based active material, and may be used together with the thickener such as carboxymethyl cellulose (CMC).

The separator 130 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, or the like. The separator 240 may include a nonwoven fabric formed of a glass fiber having a high melting point, a polyethylene terephthalate fiber, or the like.

According to embodiments, the cathode and the anode may be alternately and repeatedly stacked with the separator 130 interposed therebetween to define the electrode assembly 110a and 110b.

For convenience of illustration, the electrode assembly 110a and 110b is illustrated as a stacked type in FIG. 3, but the electrode assembly 110a and 110b may have, e.g., a jelly-roll structure by winding or folding of the separator 130.

In some embodiments, the electrode assemblies 110a and 110b may be accommodated together with an electrolyte solution in the prismatic case 100 to define a secondary battery. For example, as illustrated in FIG. 1, a battery cell may be defined by the prismatic case 100 and the stacked structure 200 accommodated in the case 110 and including a plurality of the electrode assemblies 110a and 110b.

A non-aqueous electrolyte solution may be used as the electrolyte. The non-aqueous electrolyte solution may include a lithium salt as the electrolyte and an organic solvent, and the lithium salt is expressed as, e.g., Li⁺X⁻, and as an anion (X-) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, or the like.

For example, propylene carbonate (PC), ethylene carbonate (EC), diethyl carbonate (DEC), dimethyl carbonate (DMC), ethylmethyl carbonate (EMC), methylpropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like, may be used as the organic solvent. These may be used alone or in a combination of two or more therefrom. may be used alone or in a combination of two or more therefrom.

In an embodiment, the stacked structure may include a plurality of insulating barrier structures, and the insulating barrier structures may be disposed between electrode assemblies. Accordingly, the heat transition between the electrode assemblies may be prevented while improving a battery capacity, thereby providing the secondary battery with improved safety.

For example, when the stacked structure includes two insulating barrier structures, the stacked body includes three electrode assemblies, and each of the insulating barrier structures may be disposed between the electrode assemblies.

As described above in FIGS. 1 and 2, in the secondary battery according to embodiments, the insulating barrier structure 300 including a polymer having low thermal conductivity and having thermally insulating properties may be disposed between a plurality of the electrode assemblies 110a and 110b. Thus, even when ignition occurs in one electrode assembly, ignition of another electrode assembly may be delayed. Thus, stability of the secondary battery may be improved.

## Claims

1. A secondary battery comprising:
a case; and
a stacked structure accommodated in the case, the stacked structure comprising:
a plurality of electrode assemblies; and
an insulating barrier structure disposed between the electrode assemblies.

2. The secondary battery of claim 1, wherein the insulating barrier structure includes a polymer having a thermal conductivity of 0.01 W/mK to 0.35 W/mK.

3. The secondary battery of claim 2, wherein the insulating barrier structure consists of the polymer.

4. The lithium secondary battery of claim 1, wherein the insulating barrier structure includes at least one polymer selected from the group consisting of polyimide, polytetrafluoroethylene, polyurethane, polystyrene, polyvinyl chloride, cellulose acetate, polyvinylidene fluoride, polyacrylonitrile, polymethyl methacrylate, polyvinylacetate, and polyvinyl alcohol.

5. The lithium secondary battery of claim 1, wherein a thickness of the insulating barrier structure is in a range from 10 µm to 200 µm.

6. The secondary battery of claim 1, wherein the case comprises a prismatic case that has main surfaces opposing each other, an external terminal withdrawal surface connected to upper sides of the main surfaces, and side surfaces opposing each other.

7. The secondary battery of claim 6, wherein the electrode assembly includes active surfaces facing the main surfaces of the prismatic case, an electrode tab withdrawal surface facing the side surface of the prismatic case, an upper surface facing the external terminal withdrawal surface of the prismatic case, and a lower surface facing a bottom surface of the prismatic case and opposing the upper surface.

8. The secondary battery of claim 7, wherein the insulating barrier structure contacts the active surfaces of adjacent electrode assemblies, and faces the main surface of the prismatic case with the electrode assembly interposed therebetween.

9. The secondary battery of claim 8, wherein the insulating barrier structure extends toward the external terminal withdrawal surface of the prismatic case, and does not protrude over the upper surface of the electrode assembly.

10. The secondary battery of claim 8, wherein the insulating barrier structure extends toward the side surface of the prismatic case, and does not protrude beyond the electrode tab withdrawal surface of the electrode assembly.

11. The secondary battery of claim 7, wherein the insulating barrier structure is not disposed on an outermost active surface of the stacked structure among the active surfaces of the electrode assemblies.

12. The secondary battery of claim 7, further comprising:
an electrode lead extending along the side surface of the prismatic case toward the external terminal withdrawal surface; and
an external terminal disposed on the external terminal withdrawal surface of the prismatic case and connected to the electrode lead,
wherein the electrode assembly comprises an electrode tab protruding from the electrode tab withdrawal surface to be connected to the electrode lead.

13. The secondary battery according to claim 12, wherein the electrode lead includes an extension portion connected to the electrode tab and extending along the side surface of the prismatic case, and a connection portion extending from the extension portion in parallel to the external terminal withdrawal surface to be connected to the external terminal.
